# EUROPÄISCHE PATENTSCHRIFT

(11) **EP 1 073 601 B1**
(45) Veröffentlichungstag und Bekanntmachung des Hinweises auf die Patenterteilung: **02.07.2003**
(21) Anmeldenummer: 99911565.2
(22) Anmeldetag: 15.04.1999
(51) Int. Cl.: B65H 29/02, B65H 29/60, B65G 9/00

(54) **BEARBEITUNGSSYSTEM ZUR BEARBEITUNG VON STÜCKGUT**
PROCESSING SYSTEM FOR PROCESSING PIECE GOODS
SYSTEME DE TRAITEMENT POUR TRAITER DES COLIS

(30) Priorität: 20.04.1998 CH 89398
(43) Veröffentlichungstag der Anmeldung: 07.02.2001
(73) Patentinhaber: Ferag AG, 8340 Hinwil (CH)
(72) Erfinder: REIST, Walter, CH-8340 Hinwil (CH)
(74) Vertreter: Frei, Alexandra Sarah
(86) Internationale Anmeldenummer: CH9900151
(87) Internationale Veröffentlichungsnummer: WO99054244

(56) Entgegenhaltungen:
- WO-A-98/03420
- WO-A-98/03422
- US-A- 4 881 468

## Beschreibung

Die Erfindung betrifft ein Bearbeitungssystem nach dem Oberbegriff des ersten, unabhängigen Patentanspruchs. Das Bearbeitungssystem dient der Bearbeitung von Stückgut, das heisst der Bearbeitung von im wesentlichen gleichen oder mindestens ähnlichen Gegenständen, die in grossen Zahlen und in geordneter Abfolge einzeln oder in definierten Gruppen und üblicherweise in einer mehr oder weniger genau definierten Position und räumlichen Lage zu bearbeiten sind (im Gegensatz zur Bearbeitung von Schüttgut). In einer solchen Bearbeitung wird jeder Gegenstand oder jede Gegenstandsgruppe in einem Bearbeitungsschritt oder in einer Mehrzahl von nacheinander durchgeführten Bearbeitungsschritten bearbeitet und üblicherweise zwischen den Bearbeitungsschritten von einer Bearbeitungsvorrichtung zu einer nächsten Bearbeitungsvorrichtung über eine Förderstrecke gefördert.

Eine Fördervorrichtung für eine derartige Bearbeitungsvorrichtung ist beispielsweise bekannt aus der Publikation WO-98/03420.

Stückgutbearbeitungen umfassen beispielsweise für Flaschen oder andere Behälter die Berarbeitungsschritte: Reinigen, Trocknen, Prüfen, Füllen, Verschliessen und Etikettieren, für Druckprodukte beispielsweise die Schritte: Komplettieren, Schneiden, Binden oder Heften, Sortieren, Adressieren, Gruppieren und Verpacken. Die Gegenstände (z.B. Behälter oder Druckprodukte) werden meist in einer Mehrzahl von seriell aufeinanderfolgenden Bearbeitungsvorrichtungen bearbeitet, wobei sie mit geeigneten Haltemitteln in der notwendigen, durch die Bearbeitungsvorrichtung definierten Bearbeitungsposition und -lage gehalten werden, und sie werden zu Bearbeitungsvorrichtungen und von Bearbeitungsvorrichtungen weg gefördert, wobei auch für die Förderung eine definierte Förderlage notwendig sein kann (z.B. Förderung von gefüllten, aber noch nicht verschlossenen Behältern).

Gemäss dem Stande der Technik werden derartige Stückgut-Bearbeitungen im wesentlichen nach zwei Methoden durchgeführt, wobei auch Mischformen mit Bereichen der einen und Bereichen der anderen Methode üblich sind.

Die eine der genannten Methoden ist die "Vorrichtungs-orientierte Methode", in der die einzelnen Bearbeitungsvorrichtungen und die dazwischengeschalteten einzelnen Fördervorrichtungen voneinander im wesentlichen unabhängig sind. Die zu bearbeitenden Gegenstände werden in jeder Bearbeitungsvorrichtung von Haltemitteln und für jede Förderstrecke von Fördermitteln aufgenommen und immer wieder abgegeben. Zum Ausgleich von unterschiedlichen Stückleistungen und Leistungsschwankungen einzelner Bearbeitungsvorrichtungen sind Puffer vorgesehen, die beispielsweise als Förderstrecken mit mehr oder weniger ungeordneter Förderung und Stauung (z.B. Förderbänder auf denen stehende Flaschen gestaut werden) oder als Wartepositionen, in denen Gegenstände mehr oder weniger ungeordnet auf eine Weiterbearbeitung warten, ausgebildet.

Ein wichtiger Vorteil dieser Vorrichtungs-orientierten Methode ist die funktionelle Modularität, die auch eine apparative Modularität ermöglicht und in der Förderwegverzweigungen und -zusammenführungen problemlos realisierbar sind. Ein wichtiger Nachteil der Methode sind die notwendigen, gegebenenfalls zahlreichen Übergaben der Gegenstände von einem Förder- oder Haltemittel an ein weiteres Halte- oder Fördermittel, welche Übergaben insbesondere für empfindliche Gegenstände eine hohe Belastung darstellen. Dasselbe gilt für die Puffer- und Wartepositionen, in denen Gegenstände mehr oder weniger ungeordnet gestaut und bewegt werden, wobei sie oft gezwungenermassen aneinander und an Fördermitteln reiben und dadurch unnötig belastet werden.

Die andere der genannten Methoden ist die "System-orientierte Methode", in der Bearbeitungsvorrichtungen und Fördervorrichtungen fest zu einem System verbunden sind. In einem solchen System sind Förderschritte und Bearbeitungsschritte funktionell und Fördervorrichtungen und Bearbeitungsvorrichtungen mechanisch miteinander gekoppelt, dadurch, dass auf allen Förderstrecken des Systems gemeinsam zwangsgeförderte Fördermittel vorgesehen sind und dass diese gleichzeitig mindestens teilweise die Haltemittel für die Bearbeitung in den Bearbeitungsvorrichtungen darstellen. Diese Förder/Haltemittel sind an einem zentralen Förderorgan (z.B. endlose Zugkette) angeordnet, durch das die Förder/Haltemittel in einer unveränderbaren Abfolge zwangsmässig über eine Mehrzahl von Förderstrecken und durch eine Mehrzahl von Bearbeitungsvorrichtungen transportiert werden.

In einem Bearbeitungssystem, das nach der System-orientierten Methode arbeitet, sind alle Bestandteile eingreifenden Systembedingungen unterworfen. Für alle beteiligten Bearbeitungsvorrichtungen ist der Bearbeitungstakt gleich und fest vorgegeben oder für alle Vorrichtungen gleichzeitig variierbar und die Bearbeitungslagen für die Gegenstände in verschiedenen Bearbeitungsvorrichtungen können sich nur in sehr beschränktem Rahmen voneinander unterscheiden. Der Hauptvorteil der System-orientierten Methode besteht darin, dass die Gegenstände nicht übergeben werden müssen, wodurch viel mechanischer Aufwand erspart wird. Der Hauptnachteil besteht in den strikten Bedingungen, denen sich insbesondere die Bearbeitungsvorrichtungen bezüglich Bearbeitungstakt und bezüglich Bearbeitungslage zu unterwerfen haben, derart, dass sie in vielen Fällen nicht optimal einsetzbar und insbesondere nicht frei wählbar sind. Ein weiterer Nachteil der System-orientierten Methode besteht darin, dass Förderwegverzweigungen innerhalb des Systems nur durch Ausschleusen von Gegenständen realisierbar sind, wodurch Leerstellen und eine stromabwärts reduzierte Stückleistung entstehen. Soll die System-orientierte Methode mit einer kontinuierlichen Förderung kombiniert werden, sind Förderung und Bearbeitung extrem genau miteinander zu synchronisieren, was für grössere Systeme einen grossen Aufwand darstellt.

Um die genannten Nachteile der Vorrichtungs- und der System-orientierten Methode zu reduzieren, werden vielfach, wie bereits eingangs erwähnt, Mischsysteme angewendet mit Bereichen, in denen die eine Methode angewendet wird, und daran angrenzenden Bereichen, in denen die andere Methode angewendet wird, wobei die Wahl der Methode in jedem Bereich insbesondere durch die Art der zu verwendenden Bearbeitungsvorrichtungen bestimmt ist.

Die Erfindung stellt sich nun die Aufgabe, ein Bearbeitungssystem zur Bearbeitung von Stückgut zu schaffen, welches Bearbeitungssystem in seinem Wesen System-orientiert ist, in das aber problemlos insbesondere Bearbeitungsvorrichtungen, die verschiedenste eigene Bedingungen stellen, integrierbar sind. Das erfindungsgemässe Bearbeitungssystem soll also eigentlich die Vorteile der oben kurz beschriebenen Vorrichtungs-orientierten und System-orientierten Methoden zur Bearbeitung von Stückgut vereinigen und mindestens einen Teil ihrer Nachteile vermeiden. Das erfindungsgemässe Bearbeitungssystem soll voll automatisierbar sein, soll aber auch manuelle Bearbeitungsschritte ohne weiteres zulassen. Ferner soll das erfindungsgemässe Bearbeitungssystem einfach anpassbar sein an verschiedenste zu bearbeitende Gegenstände, insbesondere auch an Gegenstände, von denen nicht alle den gleichen Bearbeitungsschritten zuzuführen sind, also das System nicht auf gleichen Förderwegen zu durchlaufen haben. Ebenso einfach soll das erfindungsgemässe Bearbeitungssystem an verschiedenste räumliche Bedingungen anpassbar und einfach erweiterbar sein.

Diese Aufgabe wird gelöst durch das Bearbeitungssystem, wie es in den Patentansprüchen definiert ist.

Dem erfindungsgemässen Bearbeitungssystem werden zu bearbeitende Gegenstände zugeführt und aus dem System werden bearbeitete Gegenstände weggeführt. Ferner können einzelnen Bearbeitungsvorrichtungen des Systems Hilfsmaterialien zugeführt und/oder von ihnen weggeführt werden. Das System ist funktionell in sich geschlossen und besteht aus einer Mehrzahl von funktionellen Einheiten, die mindestens zum Teil auch mechanische Einheiten darstellen. Die mechanischen Bestandteile eines erfindungsgemässen Bearbeitungssystems sind im wesentlichen die folgenden:
- ein Fördersystem mit einem Schienensystem und einer Vielzahl von voneinander unabhängigen Förder/Haltemitteln zur gehaltenen Förderung von Gegenständen oder Gegenstandsgruppen, welche Förder/Haltemittel auf den Schienen des Schienensystems verfahrbar sind;
- mindestens eine Aufnahmevorrichtung und mindestens eine Abgabevorrichtung, mit deren Hilfe Förder/Haltemittel mit Gegenständen oder Gegenstandsgruppen beladen und entladen werden;
- mindestens eine Bearbeitungsvorrichtung, mit deren Hilfe Gegenstände im weitesten Sinne des Wortes bearbeitet werden.

Das Schienensystem ist im wesentlichen in sich geschlossen und die voneinander unabhängigen Förder/Haltemittel sind auf den Schienen in einer vorgegebenen Richtung verfahrbar, wozu eine Mehrzahl entsprechender Antriebe vorgesehen ist. Das Schienensystem kann Schienenverzweigungen und Schienenzusammenführungen (Weichen) aufweisen. Schienensystem und Förder/-Haltemittel sind derart aufeinander abgestimmt, dass die relative Lage von Gegenständen und Schienen in weiten Grenzen frei wählbar und lokal variierbar sind. Das heisst, das Fördersystem des erfindungsgemässen Bearbeitungssystems definiert Förderwege, die in weitesten Grenzen frei wählbare steigende und abfallende Bereiche sowie Kurven aufweisen können und auf denen durch Schienenverwindungen und/oder Veränderung der Verbindung zwischen Förder- und Haltemittel verschiedene Lage-Relationen erstellbar sind.

Das Schienensystem verbindet Aufnahmevorrichtungen mit Bearbeitungsvorrichtungen, Bearbeitungsvorrichtungen mit nachfolgenden Bearbeitungsvorrichtungen, Bearbeitungsvorrichtungen mit Abgabevorrichtungen und Abgabevorrichtungen mit Aufnahmevorrichtungen, wobei die Schienenstränge im wesentlichen durch die Vorrichtungen laufen oder diese bypassieren. Die Förder/Haltemittel werden entlang der Förderstrecken zwischen Aufnahme-, Abgabe oder Bearbeitungsvorrichtungen und durch Vorrichtungen hindurch aktiv durch Antriebe gefördert oder passiv, das heisst ohne mechanischen Antrieb, beispielsweise mit Hilfe der Schwerkraft auf abfallenden Förderstreckenbereichen oder mit Hilfe von vorgängig aufgenommener kinetischer Energie auf sogenannten Auslaufstrecken.

Die Förder/Haltemittel bilden kompressible Förderströme, solange sie auf den Schienen voneinander beabstandet sind und werden in solchen kompressiblen Förderströmen einzeln angetrieben. Förderströme, in denen die Förder/-Haltemittel ohne Abstände auf den Schienen aufeinander folgen sind nicht mehr kompressibel und können auch durch Antrieb nur des hintersten Förder/Haltemittels in stossender Weise gefördert werden.

Stromaufwärts von Aufnahme-, Abgabe- und Bearbeitungsvorrichtungen sind Mittel zur Eingangskontrolle angeordnet. Mit Hilfe dieser Mittel werden zugeförderte Förder/Haltemittel bzw. von Förder/Haltemitteln gehaltene Gegenstände oder Gegenstandsgruppen in eine räumliche Lage gebracht und in eine zeitliche Abfolge geordnet, welche Lage und Abfolge den Bedingungen der Aufnahme-, Abgabe- oder Bearbeitungsvorrichtung entsprechen. Vor den Mitteln zur Eingangskontrolle ist die zuführende Förderstrecke als Sammelstrecke ausgebildet, also als Strecke, auf der Förder/Haltemittel (in leerem oder beladenem Zustand), die von der Eingangskontrolle nicht sofort behandelt werden können, in geordneter Weise aufgestaut werden.

Die Förderantriebe sind vorteilhafterweise entlang der Schienen angeordnet und treten mit sich auf der betreffenden Schienenstrecke befindenden Förder/Haltemitteln in eine Wirkverbindung. Zwischen Förderstreckenbereichen mit Antrieb (aktive Förderung) können Bereiche mit passiver Förderung angeordnet sein. Die Förderung durch Aufnahme-, Abgabe oder Bearbeitungsvorrichtungen ist auf die Funktion der Vorrichtung abzustimmen. Die Antriebe, die der reinen Förderung dienen, werden vorteilhafterweise mit einer im wesentlichen unveränderten Fördergeschwindigkeit betrieben, wobei Schwankungen in der Förderleistung sich als Schwankungen in den Abständen zwischen den Förder/Haltemitteln ausdrücken. Das heisst, für eine erhöhte Förderleistung ist es vorteilhafter, die Förderströme zu komprimieren als die Fördergeschwindigkeit zu erhöhen. Die Sammelstrecken sind vorteilhafterweise Strecken mit passiver Förderung.

Das System weist als funktionelle Einheiten eine Mehrzahl von steuerungsmässig weitgehend autonomen, das heisst insbesondere voneinander unabhängigen Stationen auf. Diese Stationen sind Bearbeitungs- Aufnahme- und Abgabestationen, die je eine Bearbeitungs-, Aufnahme- oder Abgabevorrichtung mit der Vorrichtung zugeordneten Mitteln zur Eingangskontrolle und mindestens einen entsprechenden Förderantrieb umfassen, wobei der Förderantrieb gegebenenfalls auch die Mittel zur Eingangskontrolle antreibt oder darstellt. Autonome Stationen können auch eine Mehrzahl von gleichen oder verschiedenen Vorrichtungen, die parallel oder in Serie angeordnet sind, und dazugehörige Mittel zur Eingangskontrolle und Förderantriebe aufweisen. Zusätzlich zu den genannten Vorrichtungen können autonome Stationen auch Schienenverzweigungen und/oder Schienenzusammenführungen aufweisen oder können Schienenverzweigungen oder Schienenzusammenführungen selbst autonome Stationen mit oder ohne Mittel zur Eingangskontrolle darstellen. Schliesslich sind auch autonome Stationen denkbar, die rein der Förderung dienen und dazu einen Schienenstrang und mindestens einen dazugehörigen Antrieb umfassen.

Die autonomen Stationen des erfindungsgemässen Bearbeitungssystems weisen Steuermittel auf mit Stations-internen Aktoren die in konstanter oder getakteter Weise oder aufgrund von Begebenheiten (durch sensorische Mittel erfasst) in der Station oder in der unmittelbaren Umgebung der Station direkt oder indirekt auf Förder/Haltmittel (z.B. fördern, beschleunigen, bremsen, Lage erstellen) und/oder auf Gegenstände (z.B. Lage erstellen, bearbeiten) wirken. Die Steuermittel der autonomen Stationen steuern insbesondere die Mittel zur Eingangskontrolle, die Förderung durch die Station, in der Station ablaufende zeitliche Funktionsfolgen (Taktregime) und gegebenenfalls Modi der in der Station ausgeführten Bearbeitungsschritte (Bearbeitungsregime).

Zur Steuerung und gegenseitigen Abstimmung der Stückleistung der autonomen Stationen, bzw. der Vorrichtungen in den Stationen ist vorteilhafterweise ein zentrales Management vorzusehen. Die Funktion dieses zentralen Managements besteht dann insbesondere darin, die Leistungen der einzelnen Stationen an Bedingungen, die von aussen an das System gestellt werden, oder an System-interne Gegebenheiten (insbesondere Füllstand der Sammelstrekken) anzupassen und den Betrieb des Bearbeitungssystems gegebenenfalls durch leistungsmässige Koordination der Stationen zu optimieren. Das zentrale Management kann ferner Konfigurationsaufgaben und zentrale Sicherheitsfunktionen übernehmen. Das zentrale Management kann eigene Sensoren und/oder Aktoren aufweisen oder diejenigen der autonomen Stationen benützen. Das zentrale Management ist vorteilhafterweise automatisiert, kann aber auch von einer Person übernommen werden.

Durch die hohe Flexibilität des Fördersystems, durch die hohe Autonomie der Systemstationen, die im wesentlichen eine hohe Autonomie von einzelnen Vorrichtungen oder Vorrichtungsgruppen bedeutet, und durch die klare Aufgabentrennung zwischen Stations-internem und zentralem Management erhält das erfindungsgemässe System seine hohe Integrationsfähigkeit für Vorrichtungen, die verschiedenste Ansprüche stellen, und seine einfach an externe Bedürfnisse anpassbare und einfach erweiterbare Modularität. Trotzdem wird jeder Gegenstand von im wesentlichen demselben Förder/Haltemittel durch das System gefördert und muss an sich nicht übergeben werden, was die Gegenstände schont und die Bearbeitung und Förderung vereinfacht. Diese vorteilhaften Eigenschaften werden noch unterstützt durch entsprechende Merkmale der Systembestandteile, insbesondere des Fördersystems.

Das erfindungsgemässe Bearbeitungssystem sowie seine funktionellen und mechanischen Bestandteile werden im Zusammenhang mit den folgenden Figuren im Detail beschrieben. Dabei zeigen:
- **Figur 1**: ein Schema eines Beispiels eines erfindungsgemässen Bearbeitungs-systems;
- **Figuren 2 bis 4**: verschiedene Varianten zur Leistungssteuerung eines erfindungsgemässen Bearbeitungssystems;
- **Figuren 5 bis 8**: Schemata verschiedener Ausführungsformen von Schienen und Förder/Haltemitteln und damit realisierbarer Veränderungen der Lage von Förder/Haltemitteln und/oder Gegenständen relativ zum Schienenstrang;
- **Figuren 9 bis 11**: Schemata von beispielhaften Mitteln zur Erstellung von verschiedenen zeitlichen Aufeinanderfolgen von Förder/Haltemitteln, bzw. von Gegenständen;
- **Figur 12**: eine beispielhafte Ausführungsform von Schienenstrang und darauf verfahrbaren Fördermitteln zur Anwendung in einem erfindungsgemässen Bearbeitungssystem.

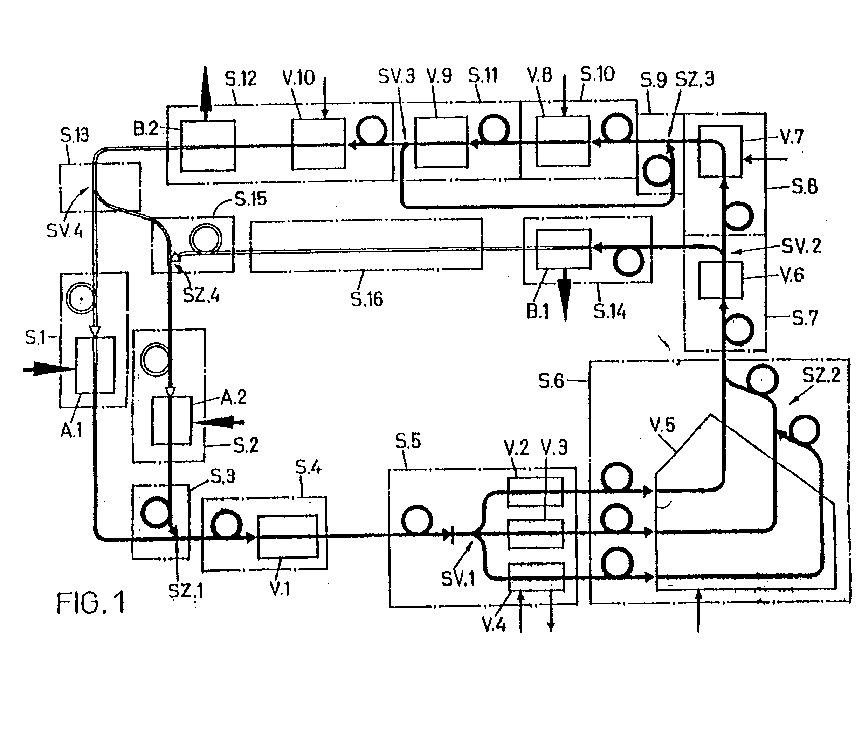

**Figur 1** stellt ein Schema eines Beispiels eines erfindungsgemässen Bearbeitungssystems dar. In diesem Schema ist das Schienensystem in Bereichen, in denen beladene Förder/Haltemittel gefördert werden mit fetten Linien und in Bereichen, in denen leere Förder/Haltemittel gefördert werden, mit doppelten Linien dargestellt. Die Förder/Haltemittel und die Gegenstände sind nicht dargestellt. Vorrichtungen zur Aufnahme (A), Abgabe (B) oder Bearbeitung (V) von Gegenständen sind als ausgezogene Boxen, autonome Stationen (S) als strichpunktierte Boxen dargestellt. Mittel zur Eingangskontrolle mit vorgeschalteten Sammelstrecken sind als in Förderstrecken integrierte Schlaufen mit Pfeil in Förderrichtung dargestellt. Zuführung und Wegführung von Gegenständen in das System und aus dem System sind mit fetten Pfeilen, die auf Aufnahmevorrichtungen A gerichtet und von Abgabevorrichtungen B weg gerichtet sind, dargestellt. Zu- und Wegführung von Hilfsmaterialien zu Bearbeitungsvorrichtungen V sind mit entsprechend gerichteten schlanken Pfeilen dargestellt.

Das System weist zehn Bearbeitungsvorrichtungen V.1 bis V.10, zwei Aufnahmevorrichtungen A.1 und A.2, zwei Abgabevorrichtungen B.1 und B.2, vier Schienenverzweigungen SV.1 bis SV.4 und vier Schienenzusammenführungen SZ.1 bis SZ.4 (Weichen) auf. Diese Vorrichtungen (A, B, V) und Weichen (SV, SZ) sind organisiert in fünfzehn autonomen Stationen S.1 bis S.15. Eine weitere autonome Station S.16 ist eine reine Förderstation.

Das in der Figur 1 dargestellte System dient beispielsweise zur Bearbeitung von Flaschen oder anderen Behälter durch Vorwaschen (V.1), Waschen (V.2, V.3 und V.4), Trocknen (V.5), erstes Kontrollieren (V.6), Füllen (V.7), Verschliessen (V.8), zweites Kontrollieren (V.9) und Etikettieren (V.10), wobei nach der ersten Kontrolle Förder/Haltemittel, die als unbrauchbar beurteilte Flaschen tragen ausgeschleust (Schienenverzweigung SV.2) werden und nach der zweiten Kontrolle Förder/Haltemittel mit Flaschen mit ungenügendem Verschluss in die Verschliessvorrichtung V.8 zurückgeführt werden (Schienenverzweigung SV.3 und Schienenzusammenführung SZ.3).

Die autonomen Stationen S.1 S.2, S.4, S.8, S.10 und S.14 weisen je eine Vorrichtung, der Vorrichtung zugeordnete Mittel zur Eingangskontrolle, mindestens einen Förderantrieb und eine der Eingangskontrolle vorgeschaltete Sammelstrecke auf. Steuermittel derartiger Stationen dienen insbesondere zur Steuerung der Eingangskontrolle, also zur Erstellung einer für die Vorrichtung geeigneten Lage und zeitlichen Aufeinanderfolge von Gegenständen, der Steuerung der Förderung der Förder/Haltemittel durch den Bereich der Vorrichtung und der Steuerung der aufeinanerfolgenden Aufnahme-, Abgabeoder Bearbeitungsvorgänge, wobei die drei Funktionen (Eingangskontrolle, Förderung und Bearbeitung) aufeinander abzustimmen sind. Die Stationssteuerung ist beispielsweise an einen Stationstakt gebunden oder wird durch ein Förder/Haltemittel, durch einen Gegenstand oder durch eine Gegenstandsgruppe, die bei den Mitteln zur Eingangskontrolle erscheinen, aktiviert. Ferner ist vorteilhafterweise auch die Zufuhr und Abfuhr von Hilfsmaterialien (z.B. Waschmedien, Energie, Füllgut, Verschlüsse, Etiketten) der Stationssteuerung unterworfen.

Die autonome Station S.5 weist drei parallel geschaltete Vorrichtungen V.2 bis V.4 (z.B. Waschvorrichtungen), eine den Vorrichtungen vorgeschaltete Schienenverzweigung SV.1 und der Schienenverzweigung vorgeschaltete Mittel zur Eingangskontrolle sowie mindestens einen Förderantrieb auf. Die Stationssteuerung übernimmt in einer derartigen Station zusätzlich zu den oben beschriebenen Funktionen auch die Steuerung der Schienenverzweigung SV.1. Diese kann beispielsweise rein taktgesteuert sein.

Die Schienenverzweigung SV.1 kann auch aufgrund von Eigenschaften der ankommenden Gegenstände gesteuert werden, derart, dass diese aufgrund einer relevanten Eigenschaft wahlweise einer der drei Vorrichtungen und damit einer verschiedenen Bearbeitung zugeführt werden. Zur Erfassung derartiger relevanter Eigenschaften sind entsprechende Sensoren vorzusehen oder sind die Förder/Haltemittel oder die Gegenstände mit beispielsweise visuellen oder elektronischen Daten zu versehen, die durch entsprechende Lesegeräte erfasst werden. Für den Fall von verschiedenen Bearbeitungen in den Bearbeitungsvorrichtungen V.2, V.3 und V.4 könnten auch für jede Vorrichtung je eine Eingangskontrolle vorgesehen und die Schienenverzweigung den Eingangskontrollen vorgeschaltet werden.

Die autonome Station S.6 weist eine Bearbeitungsvorrichtung V.5 (z.B. Trocknungsofen) auf, die von drei parallelen Schienensträngen durchlaufen wird, welche Schienenstränge in der darauffolgenden Schienenzusammenführung SZ.2 wieder vereint werden. In den zugehörigen Eingangskontrollen wird beispielsweise eine Behälterlage mit nach unten gerichteter Öffnung erstellt und werden ankommende Behälter beispielsweise ohne Veränderung der gegebenenfalls unregelmässigen Abstände auf eine Geschwindigkeit gebracht, derart, dass ihre Verweilzeit im Ofen genügt, um sie vollständig zu trocknen. Die Stationssteuerung bezieht sich im wesentlichen auf die Einstellung der Behälterlage, auf die Konstanthaltung von Ofentemperatur oder Ofendurchlüftung und der Durchlaufgeschwindigkeiten und auf die Steuerung der Schienenzusammenführung SZ.2.

Die beiden autonomen Stationen S.7 und S.11 beinhalten Kontrollvorrichtungen V.6 und V.9 mit Mitteln zur Eingangskontrolle und den Kontrollvorrichtungen nachgeschaltete Schienenverzweigungen SV.2 und SV.3. In diesen Stationen werden Gegenstände kontrolliert und beurteilt und ihrer Beurteilung entsprechend weitergefördert. Die Stationssteuerung steuert die Eingangskontrolle, die Förderung, die Aufeinanderfolge von Kontrollvorgängen und die Schienenverzweigung, die anhand eines spezifischen Kontrollresultates spezifisch angesteuert wird.

Die autonome Station S.12 weist zwei in Serie geschaltete Vorrichtungen (Bearbeitungsvorrichtung V.10 und Abgabevorrichtung B.2) und den Vorrichtungen vorgeschaltete Mittel zur Eingangskontrolle auf. Eine derartige Zusammenfassung von verschiedenen Vorrichtungen zu einer autonomen Station ist dann vorteilhaft, wenn die beiden Vorrichtungen im wesentlichen dieselben Bedingungen stellen an die Abfolge von Gegenständen oder Gegenstandsgruppen (gleicher Takt und gekoppelte Stückleistung) oder wenn die nachgeschaltete Vorrichtung keine wesentlichen Bedingungen stellt. Es ist in einem solchen Falle auch möglich, für die Förderung der Förder/Haltemittel durch die beiden Vorrichtungen denselben Antrieb zu benützen.

Die autonomen Stationen S.3, S.9, S.13 und S.15 sind autonome Weichen (Schienenverzweigung SV.4 in S.13, Schienenzusammenführungen SZ.1 in S.3, SZ.3 in S.9, SZ.4 in S.15). Die Stationssteuerung derartiger autonomer Weichen kann je nach Anforderungen sehr unterschiedlich sein. Schienenverzweigungen und Schienenzusammenführungen können nach einem festen Zeittakt umgestellt werden oder aufgrund des Vorhandenseins von Förder/Haltemitteln, wobei je einzelne oder Gruppen von Förder/Haltemitteln dem einen oder anderen Schienenstrang zugeführt oder vom einen oder anderen Schienenstrang zugelassen werden. In Schienenzsammenführungen kann auch ein Schienenstrang prioritär behandelt werden und Förder/Haltemittel aus einem nicht prioritären Schienenstrang nur in den prioritären Schienenstrang eingeschleust werden, wenn darauf Lücken erscheinen. Vor Schienenzusammenführungen sind üblicherweise mindestens für einen (nicht prioritären) der zusammengeführten Schienenstränge Sammelstrecken vorzusehen.

Die Sammelstrecken sind vorteilhafterweise Schienenstränge auf denen die Förder/Haltemittel passiv gefördert werden (abfallende Schienenstrecken oder Auslaufstrecken). Auf derartigen Strecken können die Förder/Haltemittel problemlos verschiedene Geschwindigkeiten und verschiedene Abstände voneinander haben oder sie können auch stillstehen. Die Länge jeder Sammelstrecke ist an die zu erwartenden Leistungsschwankungen mindestens der direkt auf die Sammelstrecke folgenden Station anzupassen. Vorteilhafterweise sind die Sammelstrecken in das Schienensystem integrierte Schienenstrecken und werden im first-in-first-out-Modus betrieben. Zur Verlängerung von Sammelstrecken ohne Vergrösserung des Systems können Schlaufen-förmige Schienenstränge vorgesehen werden. In speziellen Fällen können als Sammelstrecken auch Sackgasse-förmige Schienenstrecken vorhanden sein, die im first-in-last-out-Modus betrieben werden.

Die in der **Figur 1** dargestellten autonomen Stationen und das dargestellte Fördersystem sind als Beispiele aufzufassen und beschränken aus diesem Grunde das erfindungsgemässe System in keiner Weise. Es sind je nach zu bearbeitenden Gegenständen und je nach Bearbeitungsvorrichtungen auch Stationen mit anderen Anordnungen von Vorrichtungen und anderen Organisationen und anders ausgelegte Fördersysteme denkbar. Zentral für jede autonome Station ist ihre steuerungsmässige Unabhängigkeit von anderen autonomen Stationen, wobei die Aktoren der Stationssteuerung in der Station wirken aufgrund eines Stationstaktes oder aufgrund von beispielsweise sensorisch erfassten Begebenheiten in der Station oder in der nächsten Umgebung der Station. Die Stationssteuerung basiert auf bekannten Steuermitteln und Steuerverfahren und ist für jede autonome Station entsprechend der Funktion der Station auszulegen. Richtungsweisend ist die Steuerung der in der Station integrierten Vorrichtung (Aufnahmevorrichtung, Abgabevorrichtung, Bearbeitungsvorrichtung) und/oder Weiche.

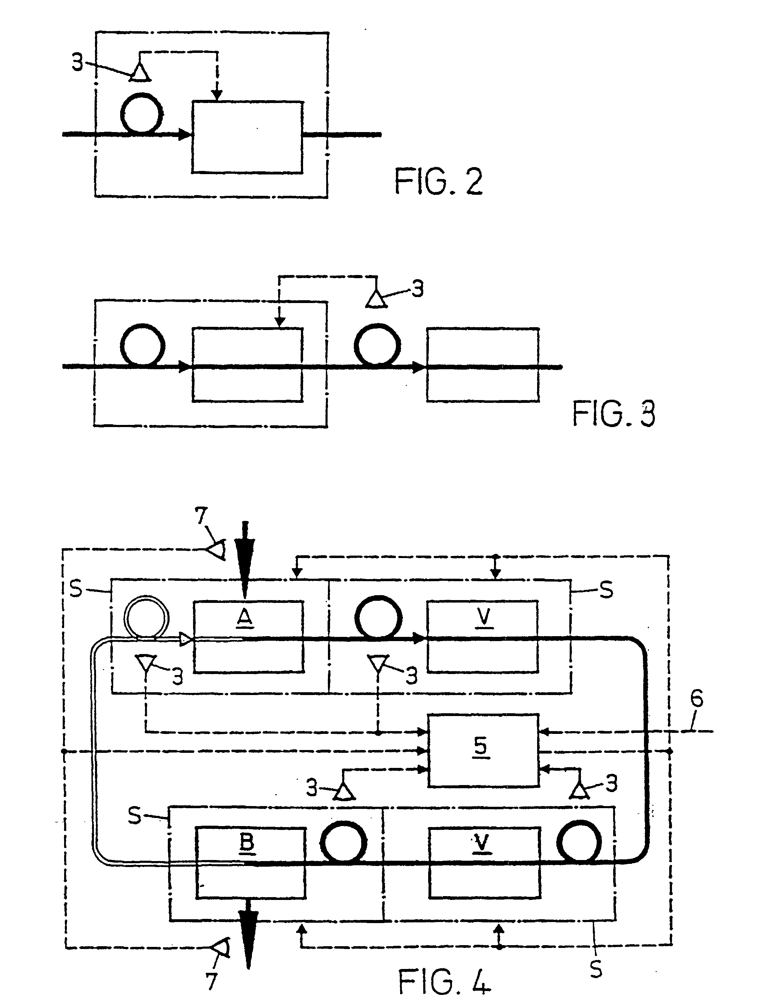

**Figuren 2 bis 4** dienen zur Illustration der Leistungssteuerung in einem erfindungsgemässen System. In den Figuren 2 bis 4 sind die gleichen Symbole verwendet wie in der Figur 1. Dazu kommen gestrichelte Linien für Datenleitungen und Augensymbole für sensorische Mittel.

Jede Vorrichtung hat eine steuerbare Stückleistung (durch die Vorrichtung geschleuste Gegenstände pro Zeiteinheit). Einfache Vorrichtungen können ein- und ausgeschaltet werden, sodass durch periodisches Ein- und Ausschalten die Stückleistung variiert werden kann. An anderen Vorrichtungen sind beispielsweise der Betriebstakt, die Durchlaufgeschwindigkeit oder andere, die Stückleistung beeinflussende Parameter verstellbar. In Anordnungen von gleichen, parallel angeordneten Vorrichtungen können diese teilweise ein- und teilweise ausgeschaltet sein.

Die erwartete, mittlere Stückleistung der autonomen Stationen ist abhängig von ihrer Position im Fördersystem. Prinzipiell muss die Stückleistung im Mittel an jeder Position des Ringes, den das Schienensystem bildet, gleich gross sein. Diese mittlere Stückleistung ist bei der Installation des Systems durch entsprechende Auswahl der Vorrichtungen zu berücksichtigen. Zeitliche Schwankungen in der Stückleistung der einzelnen Vorrichtungen sind auch im Normalbetrieb unvermeidbar (z.B. Schwankungen durch den relativen Anteil von als unbrauchbar auszuschleusenden Flaschen) und treten auch dann auf, wenn Vorrichtungen defekt sind. Diese Schwankungen werden vorteilhafterweise nicht nur durch die Sammelstrecken aufgenommen sondern auch durch eine Leistungssteuerung ausgeglichen. Mit einer derartigen Leistungssteuerung kann nicht nur mit auch grossen Schwankungen der Betrieb länger fortgesetzt werden, es können auch mehr Vorrichtungen auf ihrer optimalen Leistung betrieben werden und es können Unterbrüche für beispielsweise Reparaturen von einzelnen Vorrichtungen mit einem minimalen Betriebsunterbruch durchgeführt werden.

**Figuren 2 und 3** zeigen, wie die Stückleistung Stations-intern steuerbar ist, nämlich aufgrund des beispielsweise sensorisch erfassten Füllstandes der Sammelstrecke (Sensor 3) vor den Mitteln zur Eingangskontrolle (Figur 2) oder des Füllstandes der Sammelstrecke vor der stromabwärts nächsten Vorrichtung. Niedriger Füllstand stromaufwärts oder hoher Füllstand stromabwärts sind Kriterien für Leistungsverringerung, hoher Füllstand stromaufwärts oder niedriger Füllstand stromabwärts Kriterien für Leistungserhöhung. Es sind auch Kombinationen denkbar, nämlich beispielsweise eine Leistungssteuerung gemäss Füllstand stromaufwärts und Ausschalten bei maximalem Füllstand stromabwärts.

Für die Leistungssteuerung weist das erfindungsgemässe System aber vorteilhafterweise ein zentrales Management auf, wie dies durch die **Figur 4** illustriert ist. Die Figur 4 zeigt ein sehr einfaches erfindungsgemässes System, das für die Funktion des zentralen Managements eine zentrale Steuereinheit 5 aufweist und sensorische Mittel, beispielsweise Sensoren 3 zur Erfassung der Füllstände mindestens eines Teils der Sammelstrecken und Sensoren 7 zur Erfassung der Situation bei der Zuführung von zu bearbeitenden Gegenständen zum System und bei der Wegführung von bearbeiteten Gegenständen aus dem System. Ferner kann die zentrale Steuereinheit 5 Eingabemittel zum Eingeben von Daten aufweisen (Pfeil 6).

Das zentrale Management stimmt die Stückleistungen der Aufnahme-, Abgabe- und Bearbeitungsstationen (A, B, V) aufeinander und auf externe Bedingungen ab (Datenleitungen von der zentralen Steuereinheit zu den autonomen Stationen), indem es den Stationen ihren Möglichkeiten entsprechende Leistungsvorgaben macht (gegebenenfalls Übersteuerung einer Stations-internen Leistungssteuerung). Dabei kann das zentrale Management wechselnde Prioritäten setzen und den Betrieb des Systems beispielsweise betreffend Energiekonsum optimieren und derart betreiben, dass mindestens ein Teil der autonomen Stationen in einem für sie optimalen Betrieb laufen.

Das zentrale Management übernimmt vorteilhafterweise auch übergeordnete Sicherheitsfunktionen, die auf mehrere oder alle autonomen Stationen wirken sollen (z.B. Not-Aus). Ferner kann die zentrale Steuereinheit Betriebsstart und -stopp koordinieren und/oder für Bearbeitungsänderungen oder Teilrevisionen Konfigurationsaufgaben übernehmen.

Anstelle einer zentralen Steuereinheit kann das zentrale Management auch von einer Person übernommen werden.

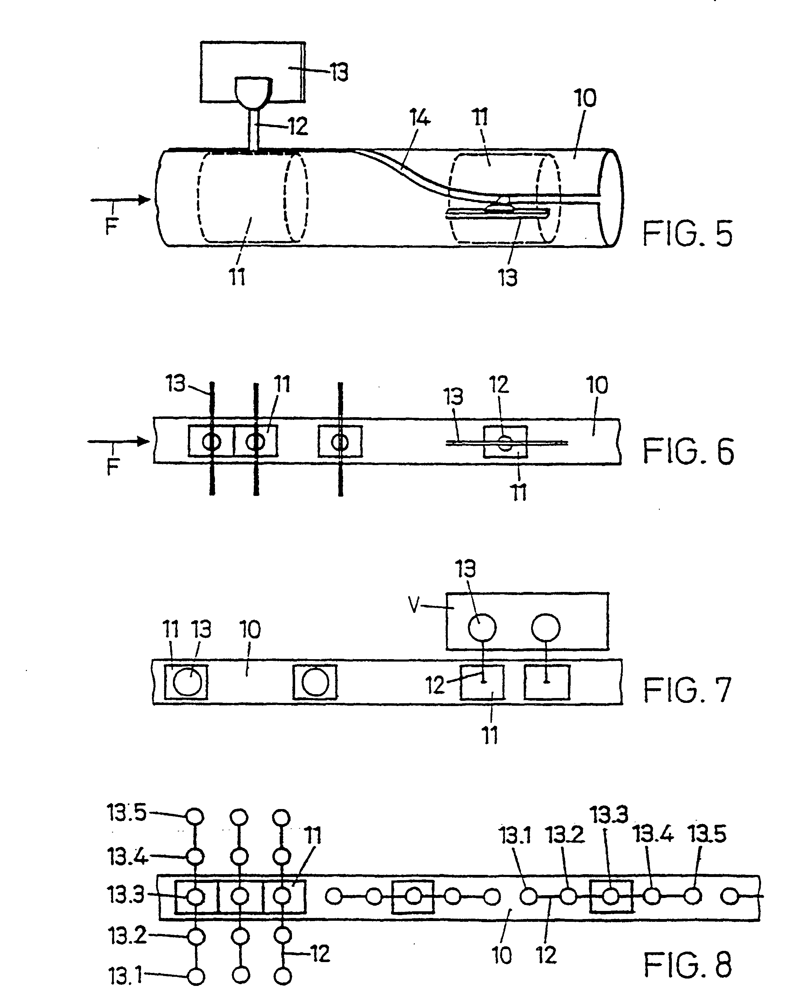

**Figuren 5 bis 8** zeigen Schemata verschiedener Ausführungsformen von Schienensträngen 10 und Fördermitteln 11 mit darauf montierten Haltemitteln 12 und damit realisierbare Lageveränderungen für Förder/Haltemittel 11/12 bzw. Gegenstände 13 oder Gegenstandsgruppen, die mittels auf Fördermitteln 11 montierten Haltemitteln 12 gehalten gefördert werden. Die Lageveränderungen werden herbeigeführt durch Verwindung des Schienenstranges und/oder durch Veränderung (z.B. Drehung, Schwenkung oder Längenveränderung) der Verbindung zwischen Fördermittel 11 und Haltemittel 12.

**Figur 5** zeigt schematisch eine Verwindung eines Schienenstranges 10 in Form eines Führungskanals, in dem Fördermittel 11 in einer Förderrichtung F verfahrbar sind. An den Fördermitteln 11 sind Haltemittel 12 (z.B. Greifer) zum Halten von beispielsweise flächigen Gegenständen 13 angeordnet. Die Haltemittel 12 ragen aus einer schlitzförmigen Öffnung 14, die sich über die Länge des Führungskanals 10 erstreckt und die sich bei Verwindungen des Kanals ebenfalls verwindet. Die Figur 5 zeigt einen Übergang von einer senkrechten Lage der Gegenstände 13 zu einer waagrechten Lage durch Verwindung des Schienenstranges 10 um 90°. Eine derartige Einstellung einer bestimmten Lage der geförderten Gegenstände eignet sich beispielsweise für die Bearbeitung in Vorrichtungen, die auf verschiedenen Seiten des Führungskanals angeordnet sind und gegebenenfalls eine bestimmte Lage der Gegenstände (z.B. senkrecht oder waagrecht) voraussetzen.

**Figur 6** zeigt aus der Vogelschau einen weiteren Schienenstrang 10, auf dem Fördermittel 11 mit daran angeordneten Haltemitteln 12 verfahrbar sind. Durch Drehen der Haltemittel 12 auf den Fördermitteln 11 werden die flächigen Gegenstände 13 von einer quer zur Förderrichtung ausgerichteten Lage (links) in eine parallel zur Förderrichtung ausgerichtete Lage (rechts) gebracht. Dabei kann die Querlage beispielsweise für Sammelstrecken (wenig Ausdehnung in Schienenrichtung und damit wenig Platzbedarf) und die Längslage für Bearbeitungen erstellt werden.

**Figur 7** zeigt auf Fördermitteln 11 schwenkbar angeordnete Haltemittel 12, mit denen Gegenstände 13 beispielsweise in eine für die Bearbeitung in der Bearbeitungsvorrichtung V geeignete Lage bringbar sind.

**Figur 8** zeigt drehbar auf Fördermitteln angeordnete Haltemittel mit denen Gruppen von Gegenständen (13.1 bis 13.5) förderbar sind, wobei je nach Drehlage der Haltemittel 12 die Gegenstände seriell (rechts) oder in einer Mehrzahl von parallelen Reihen (links) angeordnet sind. Der links dargestellte inkompressible Förderstrom eignet sich vor allem für Sammelstrecken oder für Bearbeitungsstationen, wie beispielsweise ein Trocknungsofen, in dem sich durch die Querlage der Gruppen eine hohe Gegenstandsdichte erstellen lässt und sich dadurch eine Parallelführung von Schienensträngen, wie sie in der Figur 1 für die Vorrichtung V.5 dargestellt ist, gegebenenfalls erübrigt.

Lageänderungen, wie sie als Beispiele in den Figuren 5 bis 8 dargestellt sind, werden insbesondere bei den Eingangskontrollen durchgeführt, können aber auch vor Sammelstrecken zur Erstellung einer Schienenlängen-sparenden Anordnungen vorteilhaft sein. Verwindungen (Figur 5) und Lageänderungen durch Änderung der Verbindung zwischen Fördermittel und Haltemittel (Drehen, Schwenken, Verlängern etc.) können auch beliebig kombiniert werden. Verwindungen sind üblicherweise rein durch die Verwindung des Schienenstranges gesteuert, Veränderungen der Verbindungen zwischen Fördermittel und Haltemittel durch entsprechende Kulissen (starr für unbedingte Änderungen, beweglich für bedingte Änderungen).

Lageänderungen, wie sie als Beispiele in den Figuren 5 bis 8 dargestellt sind, unterstehen der Steuerung der autonomen Stationen. Vom zentralen Management kann beispielsweise die Geschwindigkeit einer zyklischen Bewegung einer Kulisse gesteuert werden. Weitere Lageänderungen können durch Trennen von Haltemittel und Fördermittel oder durch vorübergehendes Abladen der Gegenstände von den Förder/Haltemitteln realisiert werden.

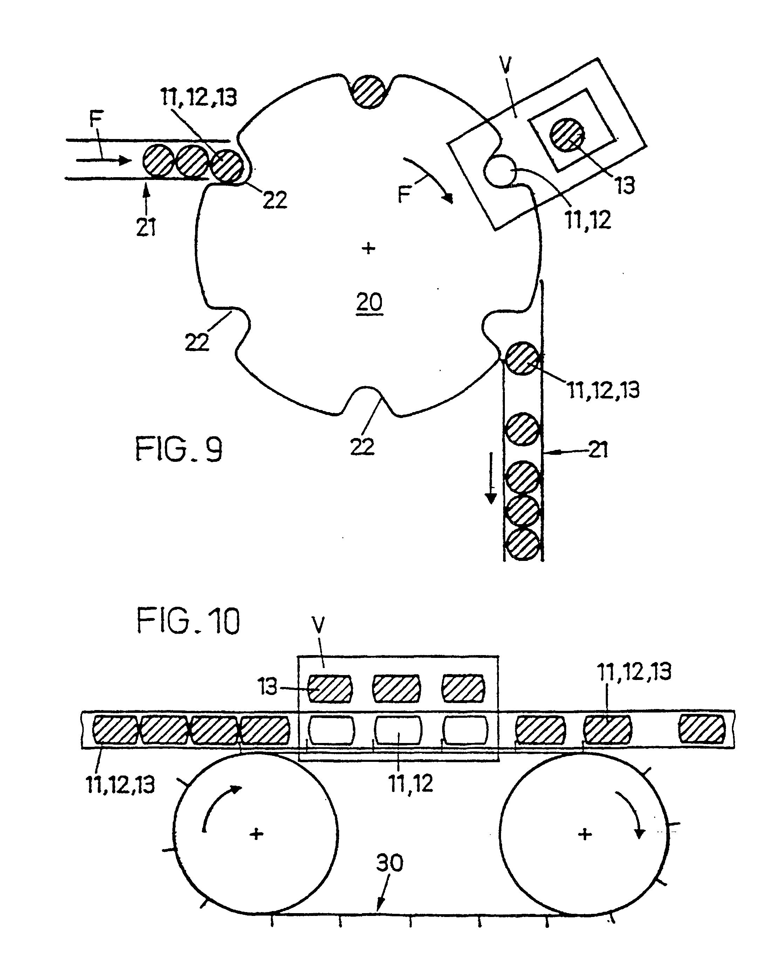

**Figuren 9 bis 11** zeigen Schemata von beispielhaften Mitteln zur Erstellung von verschiedenen zeitlichen Aufeinanderfolgen von Förder/Haltemitteln, bzw. von Gegenständen, die in Aufnahme-, Abgabe- oder Bearbeitungsstationen eines erfindungsgemässen Bearbeitungssystems, insbesondere als Mittel zur Eingangskontrolle anwendbar sind.

**Figur 9** zeigt ein Taktrad 20, mit dem beispielsweise beladene Förder/Haltemittel 11/12/13 von einer Sammelstrecke 21 einzeln entnommen und einer Bearbeitungsvorrichtung V zugefördert werden. Das Taktrad 20 ist beispielsweise in einer getakteten Art angetrieben, in der Rotationstakte mit Stillstandstakten abwechseln. In jedem Rotationstakt wird das Taktrad 20 derart gedreht, dass die Position jeder Förderlücke 22 nach dem Takt der Position der vorlaufenden Förderlücke vor dem Takt entspricht. In jedem Stillstandstakt wird aus der vorgeschalteten Sammelstrecke 21 beispielsweise durch die Wirkung der Schwerkraft ein beladenes Förder/Haltemittel 11/12/13 in einer Förderlücke 22 positioniert und in der Bearbeitungsvorrichtung V ein Gegenstand 13 bearbeitet, wozu der Gegenstand 13 in eine Bearbeitungsposition gebracht wird, dadurch dass die Verbindung zwischen Fördermittel 11 und Haltemittel 12 verändert wird (vergleiche Figur 7), dadurch, dass das beladene Haltemittel vom Fördermittel getrennt wird, oder dadurch, dass wie dargestellt der Gegenstand vom Förder/Haltemittel 11/12 entnommen und nach der Bearbeitung wieder aufgeladen wird. Die wieder beladenen Förder/Haltemittel 11/12/13 werden dann beispielsweise wiederum durch die Schwerkraft aus den Förderlücken 22 entnommen und beispielsweise einer weiteren Sammelstrecke 21 zugeführt.

Durch das Taktrad 20 wird als zeitliche Abfolge durch die Bearbeitungsvorrichtung V ein getakteter Strom von Gegenständen 13, bzw. von beladenen Förder/Haltemitteln 11/12/13 erzeugt, welcher Strom mit aufeinanderfolgenden Bearbeitungsvorgängen synchronisiert ist. Die Synchronisation von Bearbeitungsvorgängen und Taktrad ist Sache der Stationssteuerung für eine Station, in der das Taktrad die Funktion der Eingangskontrolle und des Förderantriebes durch die Station übernimmt. Die Steuerung kann zusätzlich auch ein Stoppen des Taktrades und der Bearbeitung bei leerer vorgeschalteter Sammelstrecke oder bei voller nachgeschalteter Sammelstrecke beinhalten. Um von der zentralen Steuerung angeforderte Leistungsvariationen erfüllen zu können, kann die Taktlänge variierbar sein.

Takträder in der in Figur 9 dargestellten Art eignen sich nicht nur für Bearbeitungsstationen sondern auch für Aufnahme- und Abgabestationen.

**Figur 10** zeigt ein weiteres beispielhaftes Mittel zur Erstellung einer zeitlichen Abfolge von beladenen Förder/Haltemitteln 11/12/13 und zur Förderung von Förder/Haltemitteln durch eine Vorrichtung (z.B. Bearbeitungsvorrichtung V) oder an einer Vorrichtung vorbei. Anstelle eines Taktrades kommt hier eine endlose Mitnehmerkette 30 zur Anwendung, die einen kontinuierlichen Strom von äquidistanten beladenen Förder/Haltemitteln 11/12/13 in die Vorrichtung V und wieder aus der Vorrichtung hinaus fördert. In der Bearbeitungsvorrichtung werden die Förder/Haltemittel 11/12 bespielsweise entladen und nach der Bearbeitung der Gegenstände 13, die hier während einer kontinuierlichen Förderung vor sich geht, wieder beladen. Anstelle des Belade- und Aufladevorganges tritt auch hier vorteilhafterweise eine Erstellung einer Bearbeitungslage, wie dies im Zusammenhang mit den Figuren 5 bis 8 beschrieben wurde.

Für die Steuerung der in der Figur 10 dargestellten Mittel ist die im Zusammenhang mit der Figur 9 beschriebene Steuerung entsprechend anzuwenden.

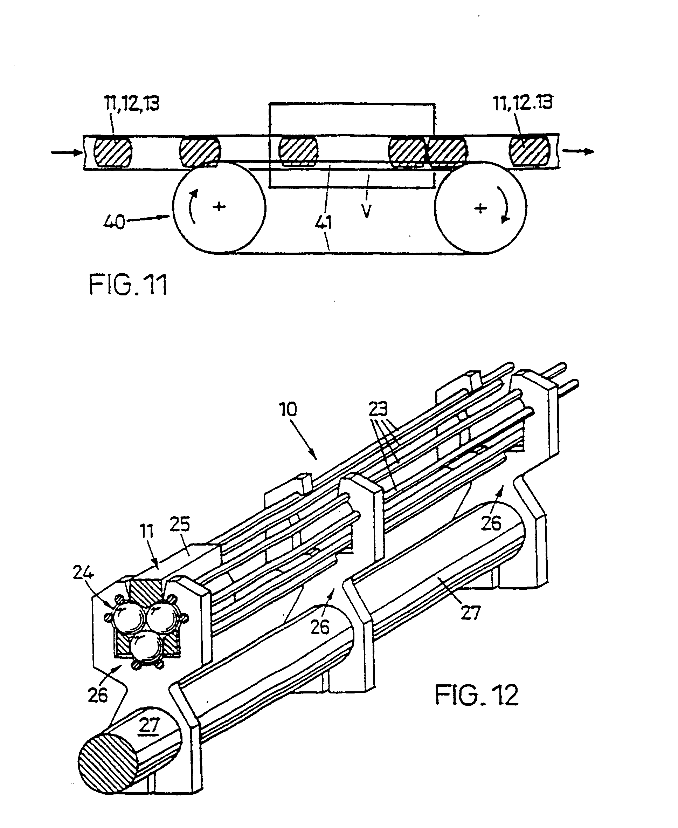

**Figur 11** zeigt die Erstellung einer zeitlichen Abfolge von beladenen Förder/-Haltemitteln 11/12/13 und deren Förderung durch eine Bearbeitungsvorrichtung V. Dabei werden die beladenen Förder/Haltemittel 11/12/13, sobald sie im Bereiche des Antriebes 40, der als angetriebenes, endloses Zugseil 41 ausgebildet ist, angekoppelt, beispielsweise dadurch, dass das Zugseil 41 in eine an den Fördermitteln angeordnete Nut gepresst wird. Dadurch entsteht ein Förderstrom durch die Bearbeitungsstation, der eine konstante Geschwindigkeit hat und in dem die beladenen Förder/Haltemittel im wesentlichen beliebige Abstände voneinander haben. Die Bearbeitungsvorrichtung V ist in diesem Falle derart zu steuern, dass ein Bearbeitungsvorgang initiiert wird, wenn ein beladenes Förder/Haltemittel 11/12/13 die Bearbeitungsposition erreicht hat.

Im Zusammenhang mit den Figuren 1 bis 11 sind verschiedene Steuerfünktionen von autonomen Stationen beschrieben worden. Weitere Beispiele derartiger Funktionen sind:
- Steuerung des Bearbeitungsmodus einer Bearbeitungsvorrichtung aufgrund von Eigenschaften von Gegenständen;
- Stations-interne Abschaltungen und entsprechende Alarmierung bei fehlerhaften Zuständen.

Damit Stations-interne Steuerungen aufgrund von Eigenschaften von Gegenständen durchgeführt werden können, ist es notwendig, Sensoren zur Erkennung der relevanten Eigenschaften zu installieren oder Daten, die die relevanten Eigenschaften codieren, beispielsweise auf dem Förder/Haltemittel in Form eines Strichcodes oder eines Datensatzes mitzuführen und entsprechende Lesegeräte in den Stationen zu installieren.

Die obige Liste und die vorangehenden Beschreibungen zeigen, dass die Steuerungen der autonomen Stationen im Falle von Bearbeitungsstationen mit Steuerungen entsprechender Bearbeitungsvorrichtungen, die nicht in einem System integriert sind, weitgehend übereinstimmen. Auch daraus ist ersichtlich, dass derartige Stationen ohne grosse Anpassungen in des erfindungsgemässe System integrierbar sind.

**Figur 12** zeigt eine beispielhafte Ausführungsform eines Schienenstranges 10 und darauf abgestimmte Fördermittel 11 zur Anwendung in einem erfindungsgemässen Bearbeitungssystem. Der Schienenstrang weist sechs Schienen 23 auf, die zusammen einen Förderkanal bilden, in dem das Fördermittel 11 auf Gruppen von je drei Kugeln 24 abrollt. Das Fördermittel weist einen Teil 25 auf, der aus dem Förderkanal ragt und an dem ein Haltemittel (nicht dargestellt) zu befestigen ist. Die Schienen 23 bestehen vorteilhafterweise aus Drähten und werden durch voneinander beabstandete Haltemittel 26 in ihrer relativen Position gehalten und auf einem Träger 27 fixiert. Der Träger besteht beispielsweise aus einem biegbaren Material, sodass er eine einfache Montage von Kurven erlaubt.

Verwindungen eines Schienenstranges 10, wie er in der Figur 12 dargestellt ist, sind durch entsprechende Fixierung der Tragelemente 26 rund um den Träger 27 sehr einfach realisierbar. Antriebe in Form von Takträdern, Mitnehmerketten oder Zugseilen können einfach zwischen den Schienen hindurch mit den Fördermitteln wirkverbunden werden.

Mechanischen Einheiten, die sich zur Anwendung in einem erfindungsgemässen Systems eigenen, sind bekannt. Das in der Figur 12 dargestellte Fördersystem ist beispielsweise beschrieben in der Publikation EP-387318 (oder US-5074678) und Schienenstränge dazu in den Publikationen WO-98/23509 und EP-870934. Beispiele von in einem erfindungsgemässen Bearbeitungssystem anwendbaren Weichen sind beschrieben in den Publikationen WO 98/3720 und WO-98/31623 und Beispiele von Antrieben für die Förderung in einem erfindungsgemässen Bearbeitungssystem in der Publikation EP-936161. Beispielhafte Förder/Haltemittel mit variierbaren Verbindungen zwischen Fördermittel und Haltemittel, die für ein erfindungsgemässes Verfahren entsprechend anwendbar sind, sind beschrieben in den Publikationen DE-19645092 (oder GB-2307458) oder WO-97/43197 oder in der Publikation WO-98/03422 Förder/Haltemittel, deren Haltemittel vom Fördermittel trennbar sind, und die in einem erfindungsgemässen System ebenfalls entsprechend anwendbar sind, sind beispielsweise beschrieben in der Publikation WO-98/25845

## Patentansprüche

1. Bearbeitungssystem zur Bearbeitung von grossen Zahlen von im wesentlichen gleichen oder mindestens ähnlichen Gegenständen (13), welches System die folgenden Bestandteile aufweist:
ein Fördersystem mit einem im wesentlichen in sich geschlossenen Schienensystem, mit einer Vielzahl von Förder/Haltemitteln (11/12), die mit je einem Gegenstand (13) oder mit je einer Gegenstandsgruppe beladbar und voneinander unabhängig auf Schienensträngen des Schienensystems verfahrbar sind, und mit Antriebsmitteln zum Verfahren der Förder/Haltemittel (11/12) auf den Schienensträngen (10) des Schienensystems,
mindestens eine Aufnahmevorrichtung (A), mit der Förder/Haltemittel (11/12) in aufeinanderfolgenden Aufnahmevorgängen mit je einem Gegenstand (13) oder einer Gegenstandsgruppe beladen werden;
mindestens eine Abgabevorrichtung (B), mit der Förder/Haltemittel (11/12) in aufeinanderfolgenden Abgabevorgängen entladen werden,
**dadurch gekennzeichnet,**
**dass** das Bearbeitungssystem ferner mindestens eine Bearbeitungsvorrichtung aufweist (V), mit der Gegenstände (13) oder Gegenstandsgruppen in aufeinanderfolgenden Bearbeitungsvorgängen bearbeitet werden,
**dass** die räumliche Lage der Förder/Haltemittel (11/12) oder der Gegenstände (13), mit denen Förder/Haltemittel (11/12) beladen sind, relativ zu den Schienensträngen (10) mindestens beschränkt wählbar und örtlich Variierbar ist,
**dass** den Aufnahme-, Abgabe- und Bearbeitungsvorrichtungen (A, B, V) Mittel zur Eingangskontrolle und stromaufwärts der Mittel zur Eingangskontrolle angeordnete Sammelstrecken für leere oder beladene Förder/Haltemittel (11/12) zugeordnet sind, wobei durch die Mittel zur Eingangskontrolle eine von der betreffenden Vorrichtung (A, B, V) geforderte räumliche Lage der Förder/Haltemittel (11/12) bzw. der durch die Förder/Haltemittel (11/12) geförderten Gegenstände (13) oder Gegenstandsgruppen und eine von der betreffenden Vorrichtung (A, B, V) geforderte zeitliche Abfolge von Förder/Haltemitteln (11/12) bzw. von Gegenständen (13) erstellt wird,
**dass** das Bearbeitungssystem eine Mehrzahl von autonomen Stationen (S) mit mindestens einer Aufnahme-, Abgabe- oder Bearbeitungsvorrichtung (A, B, V), mit der Vorrichtung zugeordneten Mitteln zur Eingangskontrolle, mit mindestens einem Antrieb zum Fördern von Förder/Haltemittel durch die Station und mit stations-internen Steuermitteln aufweisen,
und **dass** mindestens die Eingangskontrolle, die Förderung durch die Station und die Funktion der mindestens einen Aufnahme-, Abgabe- oder Bearbeitungsvorrichtung (A, B, V) durch die stations-internen Steuermittel gesteuert und aufeinander abgestimmt werden.

2. Bearbeitungssystem nach Anspruch 1, **dadurch gekennzeichnet, dass** es zusätzlich mindestens eine autonome Station aufweist, die anstelle der mindestens einen Abgabe-, Aufnahme- oder Bearbeitungsvorrichtung (A, B, V) eine Schienenverzweigung (SV) oder eine Schienenzusammenführung (SZ) enthält.

3. Bearbeitungssystem nach Anspruch 1 oder 2, **dadurch gekennzeichnet, dass** es zusätzlich mindestens eine autonome Station aufweist, die zusätzlich zu der mindestens einen. Abgabe-, Aufnahmeoder Bearbeitungsvorrichtung (A, B, V) eine Schienenverzweigung (SV) und/oder eine Schienenzusammenführung (SZ) enthält.

4. Bearbeitungssystem nach einem der Ansprüche 1 bis 3, **dadurch gekennzeichent,** dass es zusätzlich mindestens eine autonome Station aufweist, die nur einen Antrieb zur Förderung von Förder/Haltemitteln entlang eines Schinenstranges und Steuermittel zur Steuerung des Antriebes umfasst.

5. Bearbeitungssystem nach einem der Ansprüche 1 bis 4, **dadurch gekennzeichnet, dass** die Stückleistung von autonomen Stationen (S) ebenfalls durch die Stations-internen Steuermittel gesteuert wird aufgrund des erfassten Füllstandes der den Mitteln zur Eingangskontrolle vorgeschalteten und/oder der stromabwärts folgenden Sammelstrecke.

6. Bearbeitungssystem nach einem der Ansprüche 1 bis 4, **dadurch gekennzeichnet, dass** ein zentrales Mänagement vorgesehen ist, das die Stückleistungen der autonomen Stationen (S) gemäss System-externen Bedingungen und System-internen Begebenheiten steuert und aufeinander abstimmt.

7. Bearbeitungssystem nach Anspruch 6, **dadurch gekennzeichnet, dass** für das zentrale Management eine zentrale Steuereinheit (5) vorgesehen ist.

8. Bearbeitungssystem nach Anspruch 7, **dadurch gekennzeichnet, dass** zur Erfassung von System-internen Begebenheiten zuhanden der zentralen Steuereinheit (5) Sensormittel (3) zur Erfassung der Füllstände von mindestens einem Teil der Sammelstrecken vorgesehen sind.

9. Bearbeitungssystem nach einem der Ansprüche 7 bis 8, **dadurch gekennzeichnet, dass** zur Erfassung von System-externen Anforderungen zuhanden der zentralen Steuereinheit (5) Sensormittel (7) zur Erfassung von den zu bearbeitenden Gegenständen, die der mindestens einen Aufnahmevorrichtung (A) zur Verfügung stehen, und zur Erfassung von bearbeiteten Gegenständen, die von der mindestens einen Abgabevorrichtung (B) abgegeben sind und für eine ausserhalb des Systems weitere Bearbeitung zur Verfügung stehen, vorgesehen sind.

10. Bearbeitungssystem nach einem der Ansprüche 7 bis 9, **dadurch gekennzeichnet, dass** zur Erfassung von System-externen Anforderungen zuhanden der zentralen Steuereinheit (5) Eingabemittel zur Dateneingabe in die zentrale Steuereinheit (5) vorgesehen sind.

11. Bearbeitungssystem nach einem der Ansprüche 1 bis 10, **dadurch gekennzeichnet, dass** zur Einstellung einer von einer Aufnahme-, Abgabe- oder Bearbeitungsstation (A, B, V) oder von einer Schienenverzweigung (SV) oder Schienenzusammenführung (SZ) geforderten, räumlichen Lage von Förder/Haltemitteln (11/12) ein Schienenstrang (10) mit einer Verwindung vorgesehen ist.

12. Bearbeitungssystem nach einem der Ansprüche 1 bis 11, **dadurch gekennzeichnet, dass** eine von einer Aufnahme-, Abgabe- oder Bearbeitungsvorrichtung (A, B, V) oder von einer Schienenverzweigung (SV) oder Schienenzusammenführung (SZ) geforderte Lage eines Haltemittels (12) oder eines Gegenstandes (13) oder einer Gegenstandsgruppe eingestellt wird durch Variation der Verbindung zwischen Fördermittel (11) und Haltemittel (12).

13. Bearbeitungssystem nach Anspruch 12, **dadurch gekennzeichnet, dass** die Verbindung zwischen Haltemittel (11) und Fördermittel (12) drehbar oder verschwenkbar und/oder von variierbarer Länge oder trennbar ist.

14. Bearbeitungssystem nach einem der Ansprüche 1 bis 13, **dadurch gekennzeichnet, dass** als Mittel zur Eingangskontrolle und zur Förderung von Förder/Haltemitteln (11/12) durch eine Aufnahme-, Abgabe- oder Bearbeitungsstation (A, B, V) ein Taktrad (20), eine Mitnehmerkette (30) oder ein Zugseil (41) vorgesehen ist.

15. Bearbeitungssystem nach einem der Ansprüche 1 bis 14, **dadurch gekennzeichnet, dass** Sammelstrecken als Förderstrecken mit passiver Förderung ausgelegt sind.

16. Bearbeitungssystem nach Anspruch 15, **dadurch gekennzeichnet, dass** Sammelstrecken als abfallende Förderstrecken, auf denen Förder/Haltemittel (11/12) durch die Schwerkraft gefördert werden, oder als Auslaufstrecken, auf denen Förder/Haltemittel (11/12) durch eigene kinetische Energie gefördert werden, ausgelegt sind.

17. Bearbeitungssystem nach einem der Ansprüche 1 bis 16, **dadurch gekennzeichnet, dass** die Schienenstränge (10) des Schienensystems Förderkanäle mit sich über die Kanallänge erstreckenden, schlitzförmigen Öffnungen (14) sind und dass die Fördermittel (11) in den Kanälen verfahrbar sind und die Haltemittel (12) mit den Fördermitteln (11) derart verbunden sind, dass sie aus den schlitzförmigen Öffnungen (14) ragen.

18. Bearbeitungssystem nach Anspruch 17, **dadurch gekennzeichnet, dass** auf der Innenoberfläche der Förderkanäle sechs Schienen angeordnet sind oder dass die Förderkanäle durch sechs Schienen gebildet sind und dass die Fördermittel (11) auf Gruppen von je drei Kugeln auf diesen sechs Schienen abrollen.

19. Bearbeitungssystem nach einem der Ansprüche 1 bis 18, **dadurch gekennzeichnet, dass** in den Bearbeitungsvorrichtungen (V) die Gegenstände (13) oder Gegenstandsgruppen für die Bearbeitung von den Haltemitteln (12) in eine Bearbeitungsposition gebracht und von den Haltemitteln in der Bearbeitungsposition gehalten werden oder dass die Gegenstände (13) oder Gegenstandsgruppen für die Bearbeitung von den Förder/Haltemitteln (11/12) geladen und nach der Bearbeitung wieder auf die Förder/Haltemittel (11/12) geladen werden.

## Claims

1. Processing system for processing large numbers of substantially identical or at least similar items (13), which system comprises:
a conveying system comprising a rail system substantially closed in itself, a plurality of conveying/holding means (11/12) equipped for being loaded with an item (13) or with a group of items and being displaceable along rail tracks of the rail system independently of each other, and the conveying system further comprising drive means for displacing the conveying/holding means (11/12) along the rail tracks (10) of the rail system;
at least one loading device (A) with which the conveying/holding means (11/12) are loaded in successive loading actions with an item (13) each or with a group of items each;
at least one unloading device (B) with which the conveying/holding means (11/12) are unloaded in successive unloading actions,
**characterized in**
**that** the system further comprises at least one processing device (V) with which items (13) or groups of items are processed in successive processing actions,
**that** the spatial orientation relative to the rail tracks (10) of the conveying/holding means (11/12) or of the items (13) loaded on the conveying/holding means (11/12) is at least restrictedly selectable and locally variable,
**that** entry control means and upstream of the entry control means arranged collecting sections for empty or loaded conveying/holding means are allocated to the loading, unloading and processing devices (A, B, V), the entry control means establishing a spatial orientation and a temporal sequence of the conveying/holding means (11/12) or of the items (13) or groups of items conveyed by the conveying/holding means (11/12) respectively as required by the corresponding device (A, B, V),
**that** the processing system comprises a plurality of autonomous stations (S) comprising each at least one loading, unloading or processing device (A, B, V) with entry control means allocated to it, with at least one drive for conveying conveying/holding means through the station and with station-internal control means,
and **that** at least the entry control, the conveying through the station and the function of the at least one loading, unloading or processing device (A, B, V) are controlled and matched to each other by the station-internal controlling means.

2. Processing system according to claim 1, **characterized in that** it additionally comprises at least one autonomous station which, instead of the at least one loading, unloading or processing device (A, B, V) contains a rail bifurcation (SV) or a rail junction (SZ).

3. Processing system according to claim 1 or 2, **characterized in that** it additionally comprises an autonomous station which additionally to the loading, unloading or processing device (A, B, V) contains a rail bifurcation (SV) and/or a rail junction (SZ).

4. Processing system according to claims 1 to 3, **characterized in that** it additionally comprises at least one autonomous station which only comprises one drive for conveying of conveying/holding means along a rail track and control means for controlling the drive.

5. Processing system according to one of claims 1 to 4, **characterized in that** throughput of the autonomous stations (S) is also controlled by the station-internal controlling means according to the registered filling state of the collection section upstream of the entry control means and/or of the collection section following further downstream.

6. Processing system according to one of claims 1 to 4, **characterized in that** a central management means is provided which controls and matches to each other the throughputs of the autonomous stations (S) according to the system-external conditions and system-internal occurrences.

7. Processing system according to claim 6, **characterized in that** for the central management a central control unit (5) is provided.

8. Processing system according to claim 7, **characterized in that** for registering system-internal occurrences for the central management unit (5) sensor means (3) for registering the filling states of at least part of the collecting section are provided.

9. Processing system according to claims 7 to 8, **characterized in that** for registering system-external conditions for the central management unit (5) sensor means (7) are provided for registering items to be processed being available for the at least one loading device (A) and for registering processed items having been unloaded by the at least one unloading device (B) and being available for further processing.

10. Processing system according to claims 7 to 9, **characterized in that** for registering system-external requirements input means for data input into the central control unit (5) are provided.

11. Processing system according to one of claims 1 to 10, **characterized in that** for establishing a spatial orientation of conveying/holding means (11/12) as required by a loading, unloading or processing station (A, B, V) or by a rail bifurcation (SV) or rail junction (SZ) a twisted rail track (10) is provided.

12. Processing system according to one of claims 1 to 11, **characterized in that** an orientation of a holding means (12) or item (13) or group of items required by a loading, unloading or processing device (A, B, V) or by a rail bifurcation (SV) or rail junction (SZ) is established by changing the connection between conveying means (11) and holding means (12).

13. Processing system according to claim 12, **characterized in that** the connection between holding means (11) and conveying means (12) is rotatable or pivoting and/or of variable length.

14. Processing system according to one of claims 1 to 13, **characterized in that** as means for entry control for conveying conveying/holding means (11/12) through a loading, unloading or processing station (A, B, V) a clocking wheel (20), a chain (30) or a traction cable (41) is provided.

15. Processing system according to one of claims 1 to 14, **characterized in that** collecting sections are designed as conveying lines with passive conveyance.

16. Processing system according to claim 15, **characterized in** the that collecting sections are designed as declining conveying lines along which conveying/holding means (11/12) are conveyed by gravity or as run-out lines on which conveying/holding means (11/12) are conveyed by kinetic energy.

17. Processing system according to one of claims 1 to 16, **characterized in that** the rail tracks (10) of the rail system are conveying channels with slot-shaped openings (14) extending along the channel and that the conveying means (11) are displaceable in the channels and the holding means (12) are connected to the conveying means such that they protrude out of the slot-shaped openings (14).

18. Processing system according to claim 17, **characterized in that** on the inner surface of the conveying channels six rails are arranged or that the conveying channels are formed by six rails and that the conveying means (11) roll on groups of three balls each.

19. Processing system according to one of claims 1 to 18, **characterized in that** in the processing devices (V) the items (13) or groups of items are, for processing, brought into a processing position by the holding means and are held by these in the processing position or that the items (13) or item groups are unloaded from the conveying/holding means (11/12) and after processing are reloaded onto the conveying/holding means.

## Revendications

1. Système de traitement pour traiter un grand nombre d'objets (13) sensiblement identiques ou au moins similaires, lequel système comporte les éléments suivants :
un système de transport avec un système de rails sensiblement fermé, avec une pluralité de moyens de transport et de maintien (11/12), qui peuvent être chargés chacun d'un objet (13) ou d'un groupe d'objets et peuvent être déplacés indépendamment les uns des autres sur des tronçons du système de rail, et avec des moyens d'entraînement pour déplacer les moyens de transport et de maintien (11/12) sur les tronçons (10) du système de rails,
au moins un dispositif de prise en charge (A) avec lequel les moyens de transport et de maintien (11/12) sont chargés chacun d'un objet (13) ou d'un groupe d'objets lors d'opérations de prise en charge successives,
au moins un dispositif de dépose (B) avec lequel les moyens de transport et de maintien (11/12) sont déchargés lors d'opérations de dépose successives,
**caractérisé en ce que** :
le système de traitement comprend en outre au moins un dispositif de traitement (V) avec lequel les objets (13) ou groupes d'objets sont traités lors de d'opérations de traitement successives,
**en ce que** la position dans l'espace des moyens de transport et de maintien (11/12) ou des objets (13) avec lesquels les moyens de transport et de maintien (11/12) sont chargés peut être sélectionnée et modifiée dans une mesure au moins limitée par rapport aux tronçons de rail (10);
**en ce que** les dispositifs de prise en charge, de dépose et de traitement (A, B, V) comprennent des moyens pour le contrôle de l'entrée et des voies de collecte disposées en amont des moyens de contrôle de l'entrée pour les moyens de transport et de maintien (11/12) vides ou chargés, les moyens de contrôle de l'entrée créant une position dans l'espace demandée par le dispositif concerné (A, B, V) des moyens de transport et de maintien (11/12) ou des objets (13) ou groupes d'objets transportés par les moyens de transport et de maintien (11/12) et une succession dans le temps demandée par le dispositif concerné (A, B, V) des moyens de transport et de maintien (11/12) ou des objets (13),
**en ce que** le système de traitement comprend une pluralité de stations (S) autonomes avec au moins un dispositif de prise en charge, de dépose ou de traitement (A, B, V) auquel sont associés des moyens de contrôle de l'entrée, avec au moins un entraînement pour le transport de moyens de transport et de maintien à travers la station et avec des moyens de commande internes à la station,
et **en ce que** le contrôle de l'entrée, le transport à travers la station et le fonctionnement du dispositif de prise en charge, de dépose ou de traitement (A, B, V) au nombre d'un au moins sont commandés et synchronisés par les moyens de commande internes de la station.

2. Système de traitement selon la revendication 1, **caractérisé en ce qu'**il comprend en outre au moins une station autonome qui contient, au lieu du dispositif de prise en charge, de dépose ou de traitement (A, B, V) au nombre d'un au moins, une bifurcation des rails (SV) ou une réunion de rails (SZ).

3. Système de traitement selon la revendication 1 ou 2, **caractérisé en ce qu'**il comprend en outre au moins une station autonome qui contient, outre le dispositif de prise en charge, de dépose ou de traitement (A, B, V) au nombre d'un au moins, une bifurcation des rails (SV) et/ou une réunion de rails (SZ).

4. Système de traitement selon l'une ou l'ensemble des revendications 1 à 3, **caractérisé en ce qu'**il comprend en outre au moins une station autonome qui ne contient qu'un entraînement pour le transport de moyens de transport et de maintien le long d'un tronçon de rails et des moyens de commande pour commander l'entraînement.

5. Système de traitement selon l'une ou l'ensemble des revendications 1 à 4, **caractérisé en ce que** le débit des stations autonomes (S) est également contrôlé par les moyens de commande internes de la station sur la base de l'état de remplissage capté sur la voie de collecte précédant les moyens de contrôle de l'entrée et/ou les suivant en aval.

6. Système de traitement selon l'une ou l'ensemble des revendications 1 à 4, **caractérisé en ce qu'**il est prévu un système de gestion central qui commande et synchronise les débits de stations autonomes (S) en fonction de conditions extérieures au système et de paramètres internes au système.

7. Système de traitement selon la revendication 6, **caractérisé en ce que** le système de gestion central est une unité de commande centrale (5).

8. Système de traitement selon la revendication 7, **caractérisé en ce qu'**il est prévu, pour saisir les paramètres internes au système à l'aide de l'unité de commande centrale (5), des moyens capteurs (3) servant à détecter le remplissage d'au moins une partie des voies de collecte.

9. Système de traitement selon l'une ou l'ensemble des revendications 7 à 8, **caractérisé en ce qu'**il est prévu, pour détecter les contraintes extérieures au système à l'aide de l'unité de commande centrale (5), des moyens capteurs (7) servant à détecter les objets à traiter mis à la disposition du dispositif de prise en charge (A) au nombre d'un au moins, et à détecter les objets traités déposés par le dispositif de dépose (B) au nombre d'un au moins et disponibles pour un traitement ultérieur à l'extérieur du système.

10. Système de traitement selon l'une ou l'ensemble des revendications 7 à 9, **caractérisé en ce qu'**il est prévu, pour la détection des contraintes externes au système à l'aide de l'unité de commande centrale (5), des moyens de saisie pour l'entrée de données dans l'unité de commande centrale (5).

11. Système de traitement selon l'une ou l'ensemble des revendications 1 à 10, **caractérisé en ce qu'**il est prévu, pour régler la position dans l'espace des moyens de transport et de maintien (11/12) exigée par un dispositif de prise en charge, de dépose ou de traitement (A, B, V) ou d'une bifurcation de rails (SV) ou d'une réunion de rails (SZ), un tronçon de rails (10) doté d'une torsion.

12. Système de traitement selon l'une ou l'ensemble des revendications 1 à 11, **caractérisé en ce qu'**une position d'un moyen de maintien (12) ou d'un objet (13) ou groupe d'objet demandée par un dispositif de prise en charge, de dépose ou de traitement (A, B, V) ou par une bifurcation de rails (SV) ou une réunion de rails (SZ) est réglée par la variation de la liaison entre les moyens de transport (11) et les moyens de maintien (12).

13. Système de traitement selon la revendication 12, **caractérisé en ce que** la liaison entre les moyens de maintien (11) et les moyens de transport (12) peut pivoter ou basculer et/ou est de longueur variable ou est amovible.

14. Système de traitement selon l'une ou l'ensemble des revendications 1 à 13, **caractérisé en ce que** les moyens de contrôle de l'entrée et de transport des moyens de transport et de maintien (11/12) sont formés par un mécanisme de prise en charge, de dépose ou de traitement (A, B, V), une roue de synchronisation (20), une chaîne d'entraînement (30) ou un câble de traction (41).

15. Système de traitement selon l'une ou l'ensemble des revendications 1 à 14, **caractérisé en ce que** les voies de collecte sont conçues comme des voies de transport à transport passif.

16. Système de traitement selon la revendication 15, **caractérisé en ce que** les voies de collecte sont conçues comme des voies de transport descendantes sur lesquelles les moyens de transport et de maintien (11/12) sont mus par la gravité, ou comme des voies de fin de course sur lesquelles les moyens de transport et de maintien (11/12) sont mus par leur propre énergie cinétique.

17. Système de traitement selon l'une ou l'ensemble des revendications 1 à 16, **caractérisé en ce que** les tronçons de rails (10) du système de rails sont des canaux de transport avec des ouvertures (14) en forme de fentes s'étendant sur la longueur du canal et **en ce que** les moyens de transport (11) peuvent être déplacés dans les canaux et les moyens de maintien (12) sont reliés aux moyens de transport (11) de telle sorte qu'ils dépassent des ouvertures (14) en forme de fentes.

18. Système de traitement selon la revendication 17, **caractérisé en ce que** six rails sont disposés sur la surface intérieure des canaux de transport ou **en ce que** les canaux de transport sont formés par six rails, et **en ce que** les moyens de transport (11) roulent sur des groupes de trois billes chacun sur ces six rails.

19. Système de traitement selon l'une ou l'ensemble des revendications 1 à 18, **caractérisé en ce que** dans les mécanismes de traitement (V), les objets (13) ou groupes d'objets sont amenés dans une position de traitement par les moyens de maintien (12) en vue du traitement et retenus par les moyens de maintien dans la position de traitement, ou **en ce que** les objets (13) ou groupes d'objets sont chargés en vue du traitement par les moyens de transport et de maintien (11/12) et à nouveau chargés sur les moyens de transport et de maintien (11/12) après le traitement.
